# FASCICULE DE BREVET EUROPEEN

(11) **EP 0 536 006 B1**
(45) Date de publication et mention de la délivrance du brevet: **07.12.1994**
(21) Numéro de dépôt: 92402167.8
(22) Date de dépôt: 28.07.1992
(51) Int. Cl.: F16D 66/02

(54) **Témoin d'usure pour garniture de friction**
Verschleissanzeiger für Bremsbelag
Wear indicator for brake lining

(30) Priorité: 30.09.1991 FR 9111981
(43) Date de publication de la demande: 07.04.1993
(73) Titulaire: ALLIEDSIGNAL EUROPE SERVICES TECHNIQUES, 93700 Drancy (FR)
(72) Inventeur: Dufosse, Jacques, F-93600 Aulnay-sous-Bois (FR)
(74) Mandataire: Bentz, Jean-Paul

(56) Documents cités:
- DE-A- 3 230 266
- DE-A- 4 006 616
- FR-A- 2 418 387

## Description

La présente invention concerne les témoins d'usure électriques de la garniture de friction fixée à une plaque-support d'un patin de frein pour véhicules automobiles.

On connaît de nombreux types de témoins d'usure mettant en oeuvre une boucle d'un fil électrique susceptible d'entrer en contact avec le rotor du frein lorsque la garniture de friction est usée pour ainsi déclencher un signal lumineux indiquant au conducteur du véhicule l'état d'usure des freins du véhicule.

Ces témoins, qui doivent être d'un très faible coût, tant en fabrication qu'en temps de montage sur le patin, doivent présenter cependant des qualités importantes de fiabilité. Ces qualités résultent souvent de la façon dont le témoin d'usure est maintenu en position sur la plaque support.

D'une manière générale, la boucle en fil électrique est repue dans un logement réalisé dans un matériau doux, le tout étant introduit dans une ouverture pratiquée à cet effet dans la plaque support perpendiculairement au rotor.

Diverses solutions de verrouillage de ce logement sur la plaque-support ont été proposées.

Le document GB-A-2 047 828 parmi bien d'autres, en décrive certaines. Ces solutions présentent toutes l'inconvénient majeur de requérir un temps de montage non négligeable.

La présente invention a pour but d'obvier à ce problème au moyen d'un témoin d'usure électrique extrêmement simple et à montage rapide.

Selon l'invention, le logement de la boucle de fil électrique est constitué par un bouchon en deux parties affectant chacune une forme sensiblement semi-cylindrique dont les faces planes sont en regard l'une de l'autre et les parties cylindriques sont susceptibles de coopérer avec la paroi de l'ouverture pratiquée dans la plaque support, le fil de la boucle étant introduit à force entre les faces planes, les dimensions de chaque élément étant telles que l'introduction du fil entre les faces planes verrouille le logement dans l'ouverture.

De préférence, les deux parties du bouchon sont reliées entre elles par une charnière et forment une seule pièce.

L'invention sera mieux comprise et d'autres buts, avantages et caractéristiques de celle-ci apparaîtront plus clairement à la lecture de la description qui suit de modes de réalisations préférés donnés à titre non limitatif et à laquelle une planche de dessins est jointe sur laquelle :
- la Figure 1 représente schématiquement en coupe un logement de témoin d'usure selon l'invention, disposé dans la plaque support avant introduction du fil électrique.
- la Figure 2 représente schématiquement vu de dessus le logement de la Figure 1, et la Figure 3 représente schématiquement le logement de la Figure 1 après introduction du fil électrique.

En référence maintenant aux Figures, le patin de frein est partiellement représenté avec sa plaque support 10 et sa garniture de friction 12. Une ouverture 14 a été pratiquée dans la plaque support 10 sensiblement perpendiculairement au rotor du frein (non représenté). Ce rotor peut, bien évidemment, être un disque si le frein est du type à disque ou un tambour si le frein est du type à tambour.

Le témoin d'usure est constitué par une boucle en fil électrique repue dans un logement en matériau plastique doux destiné à s'user en même temps que la garniture de friction au contact du rotor du frein.

Ce logement est constitué par un bouchon réalisé en deux parties 16,18. Chacune de ces parties affecte une forme sensiblement semi-cylindrique. Les faces planes 20,22 respectivement, de ces deux parties 16,18 sont disposées en regard l'une de l'autre tandis que les parties cylindriques sont prévues pour coopérer avec la paroi interne de l'ouverture 14.

Dans le mode de réalisation préféré représenté, les deux parties ne forment qu'une seule pièce et sont reliées entre elles par une charnière 24. Le bouchon peut ainsi être facilement réalisé en plastique par injection. La charnière 24 permet de donner une certaine liberté de mouvement angulaire entre les deux parties 16,18 avant ou lors de l'introduction du fil électrique.

Un épaulement 26 est prévu sur chacune des faces planes 20,22 de manière à constituer une butée pour le fil électrique.

Pour favoriser la mise en place du logement que l'on décrira ci-après, les deux parties 16,18 sont pourvues, à une extrémité d'un rebord 28 faisant saillie de l'ouverture 14 et déterminant une position limite du bouchon. A l'autre extrémité, est prévu un rebord tronconique 30 faisant également saillie de l'ouverture 14 après mise en place du bouchon.

Comme on le comprendra, l'élasticité inhérente au plastique permet au bouchon d'être introduit dans l'ouverture 14 par son extrémité comportant le rebord tronconique 30, lequel vient réaliser un encliquetage du bouchon en se libérant lors de sa sortie de l'ouverture 14.

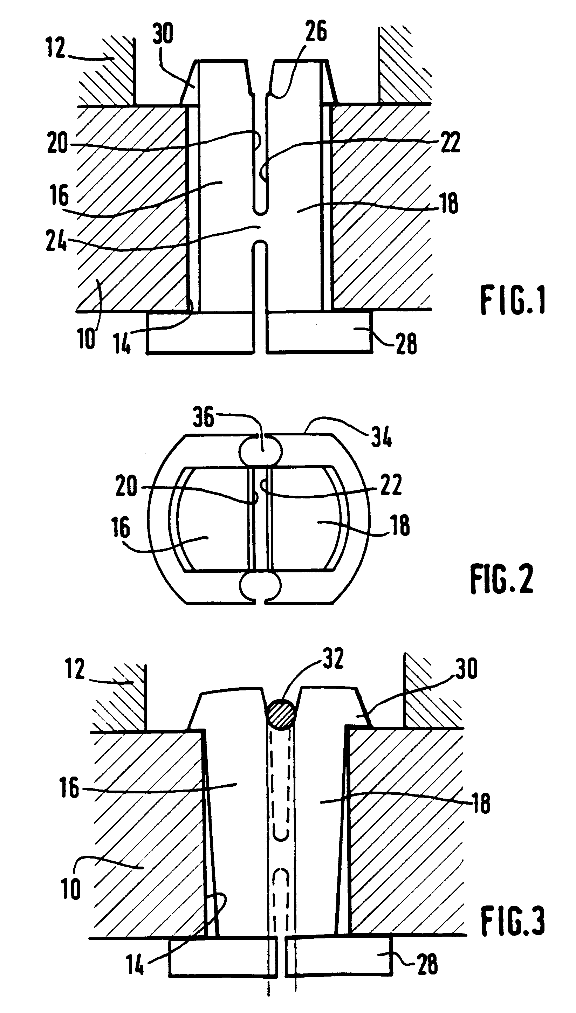

Le fil électrique 32 est introduit entre les faces planes 20,22 des deux parties. Son diamètre est tel qu'il écarte ces deux parties l'une de l'autre en pénétrant dans l'espace entre les faces planes 20,22, ce qui tend à verrouiller le logement dans l'ouverture 14, et à pincer le fil au niveau du rebord 28 comme illustré Figure 3. La butée 26 permet au fil 32 d'adopter une position déterminée par rapport à la surface de la plaque support portant la garniture de friction.

Comme illustré Figure 2, chaque partie 16,22 du bouchon peut être légèrement tronquée dans la zone 34 entre la face plane et la face semi-cylindrique pour favoriser le passage du fil électrique.

En outre, un perçage 36 peut être prévu pour former un guide-fil dans le rebord 28.

Ainsi, pour la mise en place du témoin d'usure dans son ensemble, on commence par faire une boucle simple avec le fil électrique, boucle que l'on fait traverser l'ouverture 14 de façon lâche. Ensuite on encliquette le logement en forme de bouchon dans l'ouverture 14. Enfin on exerce une traction sur le fil de l'autre côté de la boucle pour introduire le fil entre les deux parties du bouchon. Cette traction verrouille l'ensemble dans la position requise.

Bien que seul un mode préféré de réalisation de l'invention ait été décrit et représenté, il est évident que l'homme du métier pourra y apporter de nombreuses modifications sans sortir de l'esprit et du cadre de l'invention. En particulier, le rebord troncônique 30 peut être tel qu'il ne fasse saillie de l'ouverture 14 qu'après introduction du fil électrique 32 entre les faces planes 20,22.

## Revendications

1. Témoin d'usure de la garniture de friction (12) fixée à une plaque support (10) d'un patin de frein comportant une boucle d'un fil électrique (32) dont une partie est susceptible d'entrer en contact avec le rotor du frein, ladite boucle étant reçue dans un logement en matériau plastique Introduit dans une ouverture (14) pratiquée à cet effet à travers ladite plaque-support (10) caractérisé en ce que ledit logement est constitué par un bouchon en deux parties (16,18) affectant chacune une forme sensiblement semi-cylindrique dont les faces planes (20,22) sont en regard l'une de l'autre et les parties cylindriques sont susceptibles de coopérer avec la paroi de ladite ouverture (14), le fil (32) de ladite boucle étant introduit à force entre lesdites faces planes, les dimensions de chaque élément étant telles que l'Introduction dudit fil entre lesdites faces planes verrouille ledit logement dans ladite ouverture.

2. Témoin d'usure selon la revendication 1 caractérisé en ce que les deux parties (16,18) dudit bouchon sont reliées entre elles par une charnière (24) et forment une seule pièce.

3. Témoin d'usure selon la revendication 1 ou 2 caractérisé en ce que les deux parties sont pourvues d'un rebord (28) faisant saillie de ladite ouverture sur l'un des côtés de ladite plaque support.

4. Témoin d'usure selon la revendication 3 caractérisé en ce que lesdites deux parties sont pourvues d'un rebord tronconique (30) faisant saillie de ladite ouverture de l'autre côté de ladite plaque support de manière à réaliser un encliquetage lors de la mise en place dudit logement dans ladite ouverture.

5. Témoin d'usure selon l'une quelconque des revendications précédentes caractérisé en ce qu'un épaulement (26) est pratiqué sur chacune desdites parties planes de manière à former une butée limitant l'introduction dudit fil entre les deux.

## Claims

1. Wear indicator for the friction lining (12) fixed to a support plate (10) of a brake shoe comprising a loop of an electric wire (32) a part of which is capable of entering into contact with the rotor of the brake, said loop being received in a housing made of plastic material inserted into an opening (14) made for this purpose through said support plate (10), characterized in that said housing is constituted by a plug in two parts (16, 18), each assuming a substantially half-cylindrical shape, the flat faces (20, 22) of which are facing one another and the cylindrical parts of which are capable of co-operating with the wall of said opening (14), the wire (32) of said loop being forcibly inserted between said flat faces, the dimensions of each element being such that the insertion of said wire between said flat faces locks said housing in said opening.

2. Wear indicator according to claim 1, characterized in that the two parts (16, 18) of said plug are connected to one another by a hinge (24) and form a single piece.

3. Wear indicator according to claim 1 or 2, characterized in that the two parts are provided with a lip (28) projecting from said opening on one of the sides of said support plate

4. Wear indicator according to claim 3, characterized in that said two parts are provided with a lip (30) in the form of a truncated cone projecting from said opening on the other side of said support plate so as to produce a snapping home when said housing is installed in said opening.

5. Wear indicator according to any of the above claims, characterized in that a shoulder (26) is made on each of said flat parts so as to form a stop limiting the insertion of said wire between the two.

## Patentansprüche

1. Verschleißanzeige für den an einer Trägerplatte (10) eines Bremsklotzes befestigten Reibbelag (12), mit einer Schleife aus einem elektrischen Draht (32), von der ein Abschnitt in der Lage ist, mit der Bremsscheibe in Berührung zu treten, wobei die Schleife in einer Aufnahme aus einem Kunststoffmaterial aufgenommen ist, die in eine zu diesem Zweck ausgebildete, die Trägerplatte (10) durchquerende Öffnung (14) eingesetzt ist, dadurch gekennzeichnet, daß die Aufnahme durch einen Stopfen aus zwei Teilen (16, 18) gebildet ist, die jeweils eine im wesentlichen halbzylindrische Gestalt aufweisen, deren ebene Flächen (20, 22) einander gegenüberliegen und deren zylindrische Abschnitte in der Lage sind, mit der Wand der Öffnung (14) zusammenzuwirken, wobei der Draht (32) der Schleife mit Kraft zwischen die ebenen Flächen eingesetzt ist und wobei die Abmessungen jedes Elements so sind, daß das Einsetzen des Drahts zwischen die ebenen Flächen die Aufnahme in der Öffnung verriegelt.

2. Verschleißanzeige nach Anspruch 1, dadurch gekennzeichnet, daß die beiden Teile (16, 18) des Stopfens miteinander durch ein Scharnier (24) verbunden sind und ein einziges Stück bilden.

3. Verschleißanzeige nach Anspruch 1 oder 2, dadurch gekennzeichnet, daß die beiden Teile mit einem Rand (28) versehen sind, der auf einer der Seiten der Trägerplatte aus der Öffnung hervorsteht.

4. Verschleißanzeige nach Anspruch 3, dadurch gekennzeichnet, daß die beiden Teile mit einem kegelstumpfförmigen Rand (30) versehen sind, der auf der anderen Seite der Trägerplatte aus der Öffnung hervorsteht, um ein Einrasten der Aufnahme bei ihrem Einsetzen in die Öffnung zu bewirken.

5. Verschleißanzeige nach einem der vorangehenden Ansprüche, dadurch gekennzeichnet, daß auf jedem der ebenen Abschnitte eine Schulter (26) so ausgeführt ist, daß ein Anschlag gebildet ist, der das Einsetzen des Drahts zwischen die beiden Teile begrenzt.
